# EUROPEAN PATENT SPECIFICATION

(11) **EP 0 705 554 B1**
(45) Date of publication and mention of the grant of the patent: **28.04.1999**
(21) Application number: 95307097.6
(22) Date of filing: 06.10.1995
(51) Int. Cl.: A47J 37/12

(54) **Deep fryers**
Fritiergerät
Friteuse

(30) Priority: 06.10.1994 GB 9420187
(43) Date of publication of application: 10.04.1996
(73) Proprietor: KENWOOD MARKS LIMITED, Havant, Hampshire PO9 2HN (GB)
(72) Inventor: Barnet, Edward Charles William, Emsworth, Hampshire PO10 7JN (GB); Eden, Roland Cynric, Cosham, Hampshire PO9 2NW (GB)
(74) Representative: Leaman, Keith

(56) References cited:
- EP-A- 0 343 141
- EP-A- 0 587 300
- GB-A- 2 241 160
- GB-A- 2 255 002

## Description

This invention relates to deep fryers particularly for domestic use, such as for frying chips or other types of food.

GB 2255002B describes a deep fryer having a detachable electric plug comprising a thermostatic control and having a temperature detecting probe which may be inserted into a cavity or recess of a housing of the deep fryer. The plug also serves to connect a power supply between electrical contacts of a heating element associated with the bowl or container of the fryer which receives the food to be fried. When the plug is removed, the remaining components of the fryer can be washed by immersion in water. However it has been found that the connection of the plug to components of the fryer can be somewhat unsatisfactory and the plug may even be dislodged accidentally.

It is an object of the present invention to alleviate this disadvantage.

Accordingly, the invention consists in a deep fryer comprising an outer housing closable by a lid, a container for containing oil and a basket for retaining food to be fried, the container being located in the housing and the basket being removably placed in the container, a heating element enclosed in a watertight casing carried by or forming a compartment in said container and having electrical contacts extending externally of said casing in a watertight manner, and means for connecting an electrical supply to said contacts via cooperating contacts carried by a module locatable in an aperture in said housing, characterised in that said module carries a manually controllable thermostat for setting the temperature to which oil may be heated in the container and releasable locking means for locking the module in its located position in said aperture.

Preferably the releasable locking means are such that when they are unlocked to allow the module to be withdrawn from the aperture, the thermostat cannot be set.

In a preferred embodiment of the invention the manual control for the thermostat also controls the operation of the locking means. This may be achieved by means of a thermostat control which can be moved from a reference position in one direction to adjust the setting of the thermostat and in another direction to control the locking means. Preferably the thermostat control is a rotatable control.

The locking means may comprise one or more spring loaded latches which engage with the housing when the module is positioned in the aperture. Movement, e.g. rotation, of the thermostat control to the unlocking position withdraws the or each latch against the action of its spring and thereby allows a spring loaded shutter to be actuated to retain the latch in its unlocked position and so prevent movement of the thermostat control. The actuation of the spring loaded shutter may also serve to urge the module out of its aperture and facilitate its total withdrawal from the housing.

An embodiment of the invention will now be described by way of example, with reference to the accompanying drawings, in which:-
Figure 1 is a perspective view, partially broken away, of a deep fryer according to the invention,
Figure 2 is a schematic diagram showing part of the container and the module;
Figures 3 and 4 are a schematic rear view and an exploded view respectively of the module;
Figures 5 and 6 are front and rear perspective views respectively of the module in its locked position; and
Figures 7 and 8 are front and rear perspective views respectively of the module in its unlocked position.

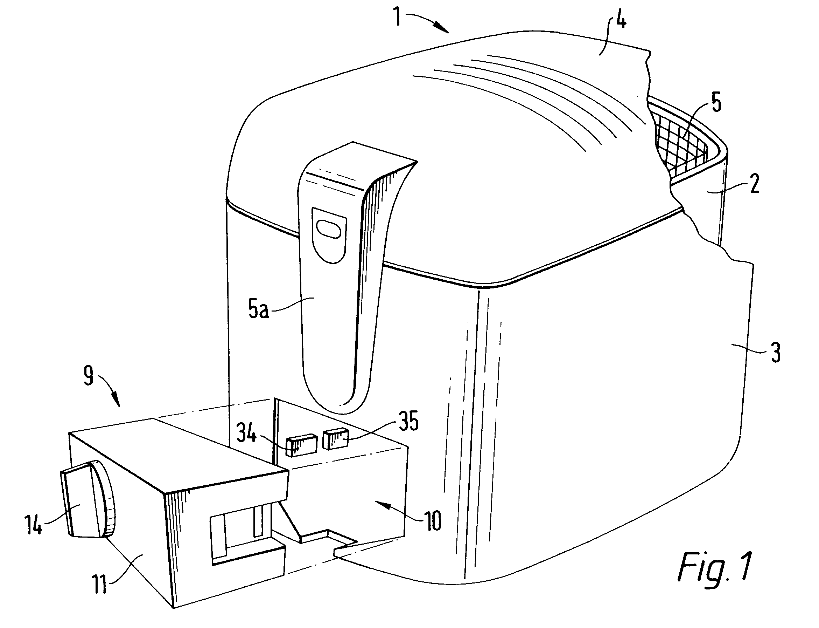

Referring firstly to Figure 1, the deep fryer 1 is generally rectangular in plan and comprises a container 2 accommodated within an outer housing 3 having a lid 4, and a wire basket 5 which fits within the container. The basket has a handle 5a which is pivotally connected to the basket and which is adapted to lie adjacent the side of the housing 3 when the basket is located in the housing. Raising of the handle 5a to a generally horizontal position causes the lid 4 to be opened so that the basket can be removed. Such an arrangement is disclosed in GB-2 241 160B. The front of the housing 3 is provided with an opening 10 in which can be located a control module 9 as will hereinafter be described.

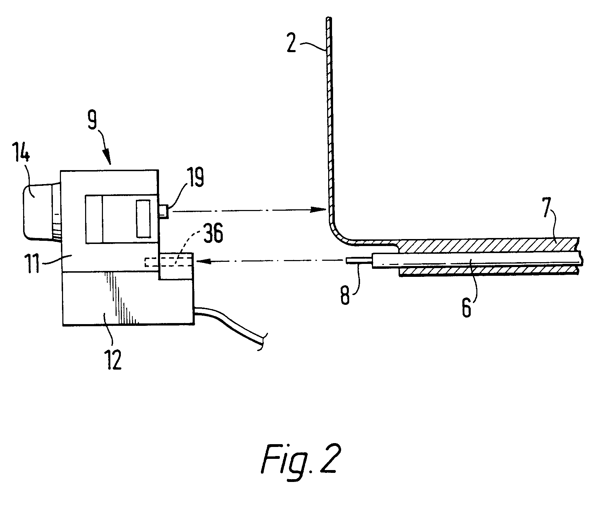

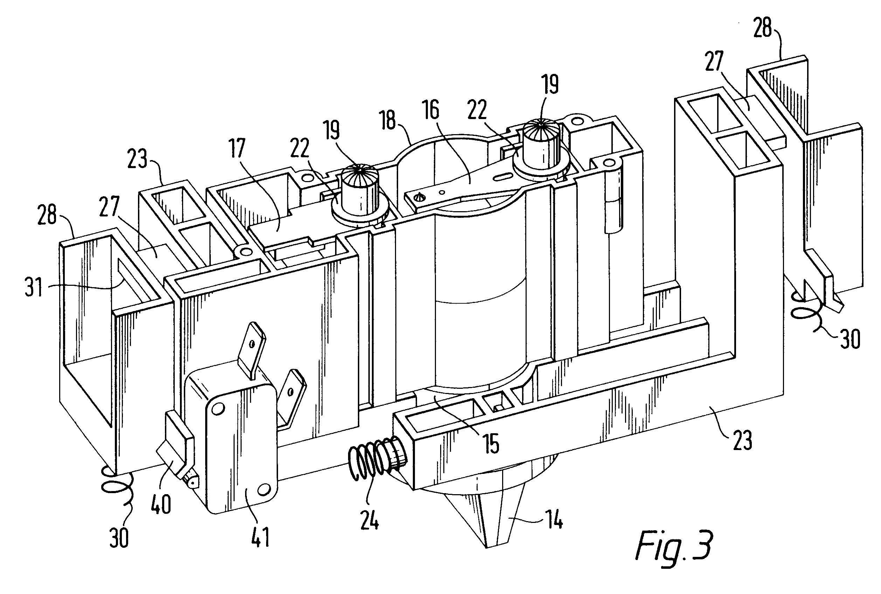

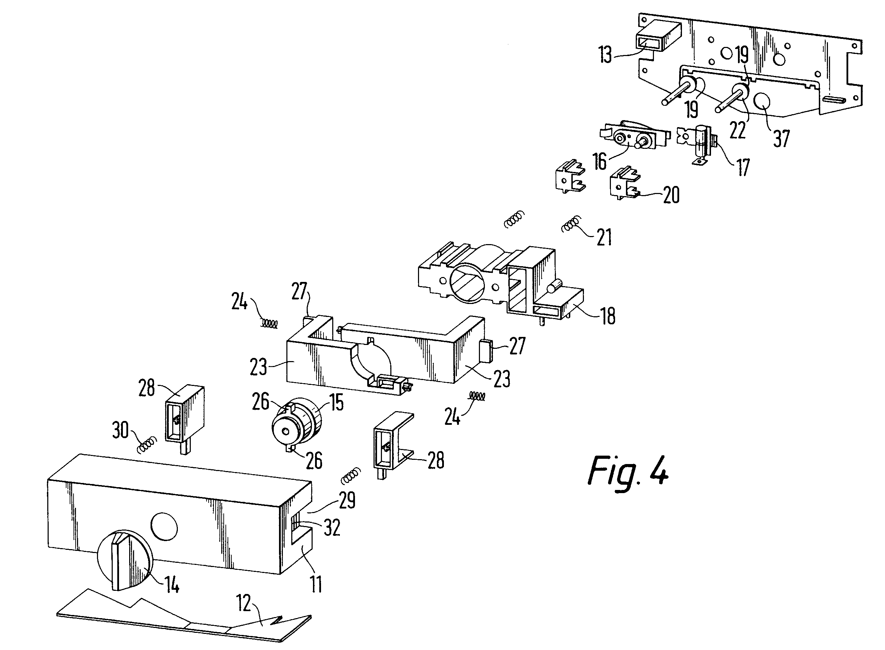

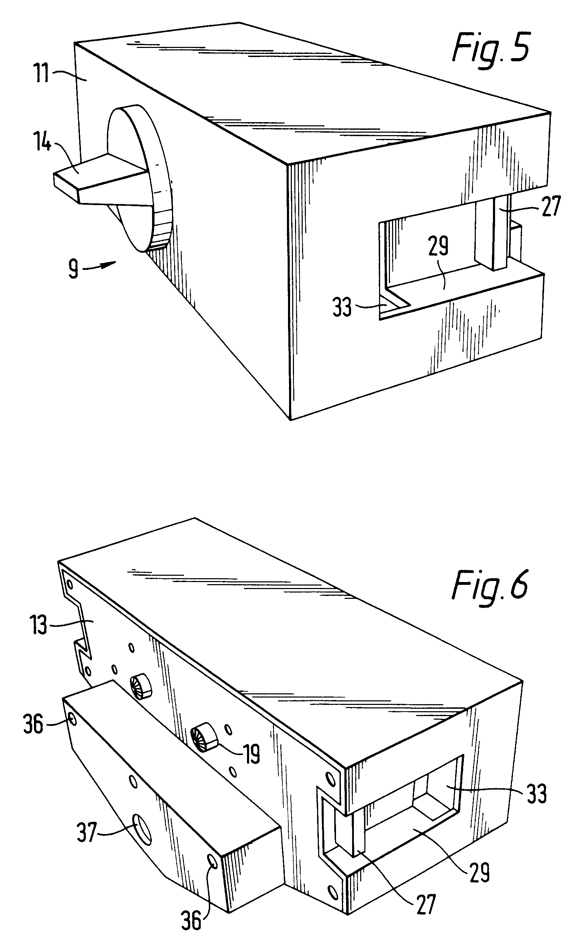

Referring now also to Figure 2, a heating element 6 sealed within a casing 7 is mounted on the underside of the container 2 such that the encased heating element is in thermal contact with the container. The element 6 has watertight electrical contacts 8 which extend from the casing 7 and which engage with complementary contacts 36 on the control module 9, when it is inserted into the opening 10 in the housing 3, as shown in more detail in Figures 3 to 8.

The module 9 comprises a rectangular housing 11, a base 12 and a rear panel 13. For convenience, these parts are not shown in Figure 3. A rotary knob 14 located on the front of the housing 11 is connected through an aperture in the housing 11 to a thermostat actuator 15. The actuator is in turn connected to a thermostat 16, which, together with a thermal cut-off 17, is housed within a thermostat housing 18.

Two contacts 19 are connected through apertures in flanges of the thermostat and the thermal cut-off to respective thermal sliders 20, which are slidably located between these compartments and the front surface of the thermostat housing 18. The ends of the contacts 19 extend through apertures in the rear panel 13 and have flanges 22 which are biassed by the springs 21 against the inside of the panel.

Two generally L-shaped latch members 23 are mounted so as to be laterally slidable in the module housing 11 adjacent the thermostat housing 18. The latch members are biassed outwardly against the module housing by springs 24 and have camming surfaces 25 which engage cams 26 on the thermostat actuator 15. The latch members 23 each have a rectangular latch 27 extending outwardly from the shorter limb of the L.

Outside the latch members 23, two shutters 28 are mounted so as to slide along recessed rectangular slideways 29 in the sides of the module housing 11. Springs 30 bias the shutters rearwardly, acting against the front of the module housing. The shutters 28 each have a rectangular aperture 31 large enough to admit the latch 27, and the slideways 29 also each have an aperture 32 of the same size, as well as a front aperture 33.

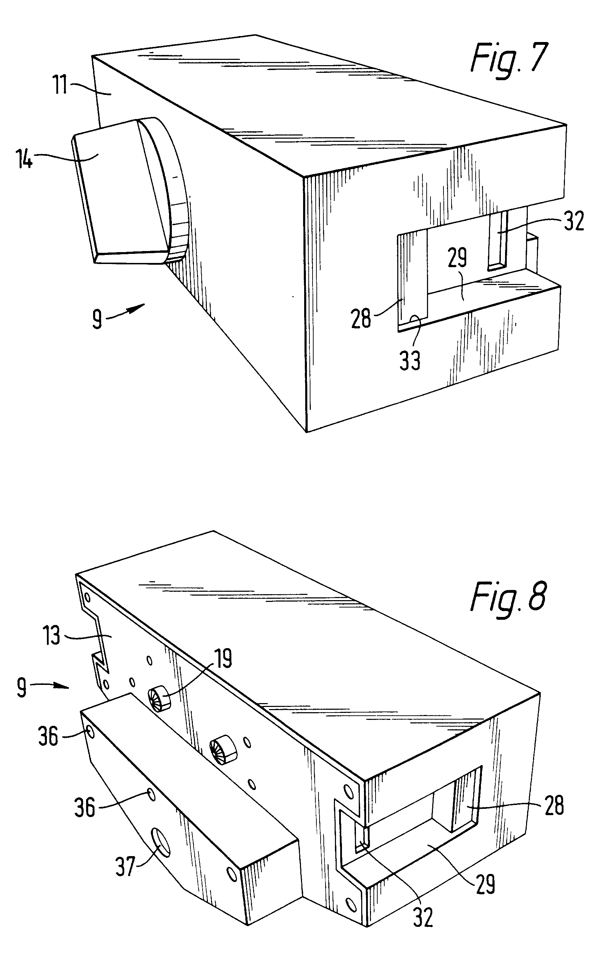

The module 9 is inserted into the opening 10 of the deep fryer housing 3 with the knob 14 in the position shown in Figure 7. In this position, the latch members 23 are held retracted by the shutters 28 since the latter are in their rearward position where the apertures 31 are not in line with the latches 27 and the front edges of the shutters extend through the apertures 33.

As shown in Figure 1, a front latch block 34 and a rear latch block 35 are arranged on either side within the opening 10. As the module 9 is inserted, the front latch blocks come into contact with the front edges of the shutters 28 and urge them forwards, relative to the module 9, against the action of the springs 30, until the latches 27 are aligned with the apertures 31. At this point the springs 24 urge the latch members 23 outwards and the latches 27 extend through the apertures 31, 32 and each engage in the gap between the latching blocks 34, 35, thus locking the module in place. At the same time the cams 26 move relative to the surfaces 25 on the thermostat actuator 10, thereby enabling the knob 15 to be rotated to set the thermostat 16, through the actuator 15.

The rear panel 13 has live, neutral and earth sockets 36 which are engaged by the respective contacts 8 of the element 6 when the module is fully inserted. Thus the element is connected to a power supply (not shown) via the thermostat 16 and a mains cord extending through an outlet 37. Also, the contacts 19 are retained against the wall of the container 2 by the pressure of the springs 21. The thermostat can now be set to a desired cooking temperature by turning the knob 14 in a clockwise direction.

In order to remove the module 9, the knob 14 must first be returned to a "zero" position in which the electrical power is cut off. The knob is then turned further anticlockwise, which withdraws the latches 27 by the action of the cams 26 on the camming surfaces 25. The shutters 28 are then urged to their rearward position by the springs 30, which also tend to eject the module 9 as the front edges of the shutters are urged away from the latch blocks 34.

When the module has been removed, the knob 14 cannot be turned clockwise, since the shutters 28 prevent outward movement of the latch members 23 and hence rotation of the cams 26. Thus the power cannot be switched on, so preventing a potential safety hazard. The container 2, housing 3, lid 4 and basket 5 can then be disassembled and immersed in water safely for cleaning purposes.

The invention, as described, provides a deep fryer having a convenient and safe control module which locks in place in the housing.

Modifications can be made to the specific embodiment described without departing from the scope of the invention. For example, the locking mechanism and the thermostat could be controlled by separate means rather than both by the knob 14, in which case the two separate controls are preferably arranged to interlock. As shown in Figure 3, as a further optional safety feature, a moulding 40 on the shutters 28 may be provided to operate a micro-switch 41 so that when the shutters 28 spring closed the micro-switch contacts are opened to prevent power to the thermostat 16 and heating element 6 unless the module is locked in the correct position. Additionally, although the specific embodiment shows a rectangular shaped fryer, other shapes of fryer such as a square or round shape may be used. Also, the thermostat control can be any suitable type of thermostatic device, such as a bimetallic or electronic device.

## Claims

1. A deep fryer (1) comprising an outer housing (3) closable by a lid (4), a container (2) for containing oil and a basket (5) for retaining food to be fried, the container (2) being located in the housing (3) and the basket (5) being removably placed in the container (2), a heating element (6) enclosed in a watertight casing (7) carried by or forming a compartment in said container (2) and having electrical contacts (8) extending externally of said casing (7) in a watertight manner, and means for connecting an electrical supply to said contacts (8) via cooperating contacts (36) carried by a module (9) locatable in an aperture (10) in said housing (3), characterised in that said module (9) carries a manually controllable thermostat (16) for setting the temperature to which oil may be heated in the container (2) and releasable locking means (23,27) for locking the module (9) in its located position in said aperture (10).

2. A deep fryer as claimed in claim 1, wherein the releasable locking means (23,27) are arranged such that, when they are unlocked to allow the module (9) to be withdrawn from the aperture (10), the thermostat (16) cannot be set.

3. A deep fryer as claimed in claim 1 or 2, wherein the manual control (14) for the thermostat (16) is also arranged to control the locking means (23,27).

4. A deep fryer as claimed in claim 3, wherein said control (14) is arranged to be moved from a reference position in one direction to adjust the setting of the thermostat (16) and in another direction to control the locking means (23,27).

5. A deep fryer as claimed in any preceding claim, wherein the thermostat control (14) is a rotatable control (14).

6. A deep fryer as claimed in any preceding claim, wherein the locking means (23,27) comprise one or more spring loaded latches (27) which engage with the housing (3) when the module (9) is positioned in the aperture (10).

7. A deep fryer as claimed in claim 6, wherein the module (9) includes a spring loaded shutter (28) arranged to retain the or each latch (27) and to prevent movement of the thermostat control (14), when the locking means (23,27) is in its unlocked position.

8. A deep fryer as claimed in claim 7, wherein actuation of the or each spring loaded shutter (28) to retain the latch (27) is arranged also to urge the module (9) out of its aperture (10) and thereby facilitate its total withdrawal from the housing (3).

## Patentansprüche

1. Fritiergerät (1) umfassend ein mit einem Deckel (4) verschließbares äußeres Gehäuse (3), einen Behälter (2) zur Aufnahme von Öl und einen Korb (5) zur Aufnahme zu fritierender Nahrungsmittel, wobei der Behälter (2) in dem Gehäuse (3) angeordnet ist und der Korb (5) herausnehmbar in den Behälter (2) eingesetzt ist, ein Heizelement (6), das von einem wasserdichten Gehäuse (7) umschlossen und von einem abgeteilten Fach in dem Behälter (2) getragen wird oder ein solches Fach bildet und elektrische Kontakte (8) besitzt, die sich wasserdicht abgeschlossen außerhalb des Gehäuses (7) erstrecken, und Mittel zum Anschluß einer elektrischen Energieversorgung an die Kontakte (8) über mit diesen zusammenwirkende Kontakte (36), die von einem Modul (9) getragen werden, welches in eine Öffnung (10) in dem Gehäuse (3) eingesetzt werden kann, dadurch gekennzeichnet, daß das Modul (9) einen von Hand regelbaren Thermostaten (16) zum Einstellen der Temperatur besitzt; auf die im Behälter (2) befindliches Öl erhitzt werden soll, und lösbare Verriegelungsmittel (23, 27) zum Verriegeln des Moduls (9) in seiner eingesetzten Position in der Öffnung (10).

2. Fritiergerät nach Anspruch 1, bei dem die lösbaren Verriegelungsmittel (23, 27) so angeordnet sind, daß der Thermostat (16) nicht verstellt werden kann, wenn die Verriegelungsmittel geöffnet sind, um das Herausziehen des Moduls (9) aus der Öffnung (10) zu gestatten.

3. Fritiergerät nach Anspruch 1 oder 2, bei dem der handbedienbare Einsteller (14) für den Thermostaten (16) auch zur Steuerung der Verriegelungsmittel (23, 27) dient.

4. Fritiergerät nach Anspruch 3, bei dem der Einsteller (14) so ausgebildet ist, daß er zum Neueinstellen des Thermostaten (16) ausgehend von einer Bezugsposition in eine Richtung bewegt werden kann, und zum Steuern der Verriegelungsmittel (23, 27) in eine andere Richtung.

5. Fritiergerät nach einem der vorstehenden Ansprüche, bei dem der Thermostateinsteller (14) aus einem drehbaren Einsteller (14) besteht.

6. Fritiergerät nach einem der vorstehenden Ansprüche, bei dem die Verriegelungsmittel (23, 27) eine oder mehrere federbelastete Einschnappklinken (27) enthalten, die mit dem Gehäuse (3) zum Eingriff kommen, wenn das Modul (9) in die Öffnung (10) eingesetzt wird.

7. Fritiergerät nach Anspruch 6, bei den das Modul (9) einen federbelasteten Verschlußmechanismus (28) umfaßt, der so ausgebildet ist, daß er die oder jede der Verschlußklinke(n) (27) zurückhält und die Bewegung des Thermostateinstellers (14) verhindert, wenn sich die Verriegelungsmittel (23, 27) in ihrer unverriegelten Stellung befinden.

8. Fritiergerät nach Anspruch 7, bei dem die Betätigung des oder jedes der federbelasteten Verschlußmechanismus(men) (28) zum Zurückhalten der Einschnappklinke (27) auch dazu dient, das Modul (9) aus seiner Öffnung (10) herauszudrücken und so seine völligen Herausnahme aus dem Gehäuse (3) erleichtert.

## Revendications

1. Friteuse (1) comportant une carrosserie extérieure (3) que peut obturer un couvercle (4), un conteneur (2) pour contenir de l'huile et un panier (5) pour retenir les aliments à frire, le conteneur (2) étant placé dans la carrosserie (3) et le panier (5) étant placé, de façon amovible, dans le conteneur (2), un élément chauffant (6) enclos dans un compartiment (7) étanche à l'eau, porté par ledit conteneur (2) ou y formant un compartiment et ayant des contacts électriques (8) qui s'étendent à l'extérieur dudit compartiment (7), avec étanchéité à l'eau, et des moyens pour relier une alimentation électrique auxdits contacts (8) par l'intermédiaire de contacts coopérants (36) portés par un module (9) qui peut se placer dans une ouverture (10) prévue dans ladite carrosserie (3), caractérisée par le fait que ledit module (9) porte un thermostat (16) qui peut être commandé manuellement pour régler la température à laquelle l'huile peut être chauffée dans le conteneur (2) et des moyens de verrouillage (23, 27), déverrouillables, pour verrouiller le module (9) dans la position où il est placé dans ladite ouverture (10).

2. Friteuse comme revendiquée dans la revendication 1, dans laquelle les moyens de verrouillage (23, 27), déverrouillables, sont disposés de façon que, lorsqu'ils sont déverrouillés pour permettre d'extraire le module (9) hors de l'ouverture (10), il n'est pas possible de régler le thermostat.

3. Friteuse comme revendiquée dans la revendication 1 ou 2, dans laquelle le bouton de commande manuelle (14) pour le thermostat (16) est également disposé pour commander les moyens de verrouillage (23, 27).

4. Friteuse comme revendiquée dans la revendication 3, dans laquelle ledit bouton de commande (14) est disposé pour, depuis une position de référence, être tourné dans un sens pour le réglage du thermostat (16) et dans l'autre sens pour commander les moyens de verrouillage (23, 27).

5. Friteuse comme revendiquée dans l'une quelconque des revendications précédentes, dans laquelle le bouton de commande (14) du thermostat est un bouton de commande rotatif (14).

6. Friteuse comme revendiquée dans l'une quelconque des revendications précédentes, dans laquelle les moyens de verrouillage (23, 27) comportent un ou plusieurs pênes (27), chargés par ressort, qui viennent en prise avec la carrosserie (3) lorsque le module (9) est placé dans l'ouverture (10).

7. Friteuse comme revendiquée dans la revendication 6, dans laquelle le module (9) inclut un obturateur (28) chargé par un ressort et disposé pour retenir le pêne, ou chaque pêne (27), et empêcher le mouvement du bouton de contrôle (14) du thermostat lorsque les moyens de verrouillage (23, 27) sont dans leur position de déverrouillage.

8. Friteuse comme revendiquée dans la revendication 7, dans laquelle la manoeuvre de l'obturateur, ou de chaque obturateur (28), chargé par un ressort pour retenir le pêne (27) est prévue également pour pousser le module (9) hors de son ouverture (10) et faciliter ainsi son extraction totale hors de la carrosserie (3).
